# EUROPEAN PATENT APPLICATION

(11) **EP 4 414 113 A1**
(43) Date of publication of application: **14.08.2024**
(21) Application number: 22878217.3
(22) Date of filing: 23.08.2022
(51) Int. Cl.: B23D 61/04, B23D 47/00, B27B 33/08

(54) **CIRCULAR SAW BLADE**

(30) Priority: 04.10.2021 JP 2021163255
(71) Applicant: Kanefusa Kabushiki Kaisha, Ohguchi-cho, Niwa-gun Aichi 480-0192 (JP)
(72) Inventor: YAMADA Nobuhide, Niwa-gun, Aichi 480-0192 (JP); YASUDA Yu, Niwa-gun, Aichi 480-0192 (JP); OKABE Fuminori, Niwa-gun, Aichi 480-0192 (JP)
(74) Representative: Maikowski & Ninnemann Patentanwälte Partnerschaft mbB
(86) International application number: PCT/JP2022/031697
(87) International publication number: WO 2023/058346

(57) **Abstract**

A circular saw blade (1) for metal cutting includes a disk-shaped base metal (2), gullets (5) opening radially outward at an outer periphery of the base metal (2), tip-receiving seats (6) recessed at rear ends of the gullets (5) in a rotational direction. The circular saw blade (1) includes cutting tips (10) mounted on the tip-receiving seats (6) and protruding radially outward from the base metal (2). A thickness of each of the cutting tips (10) is thicker than a thickness (2c) of the base metal (2). The each of the cutting tips (10) has a thin portion (15) on a radially inner side that is thinner than or equal to a thickness (2c) of the base metal (2). The thin portion (15) is located within a thickness of each of the tip-receiving seats (6) in the thickness direction.

## Description

### TECHNICAL FIELD

One embodiment of the present disclosure relates to a disk-shaped circular saw blade. The circular saw blade may be used, for example, for cutting workpieces of various metals, and has a plurality of cutting tips attached to its outer periphery.

### BACKGROUND

Conventionally known circular sawing machines are configured to cut, for example, various metal workpieces at high speed. These circular sawing machines utilize a disk-shaped circular saw blade with a blade thickness such as 2 mm. Circular saw blades for metal cutting cut a workpiece by forming a groove in the workpiece of steel material or non-steel material such as aluminum. The circular saw blade has a disk-shaped base metal and a plurality of cutting tips attached at predetermined intervals on the outer periphery of the base metal. The cutting tips may be hard cutting tips made of cemented carbide or cermet, etc.

As described in JP3895906B, a conventional circular saw blade for metal cutting includes cutting tips. The cutting tip has a thickness that is thicker than that of the base metal and has a flat side profile. Ajoint of the cutting tip, which is joined to the base metal, protrudes from the base metal in the thickness direction. When cutting workpiece, chips are generated by cutting edges. The generated chips are received in gullets formed between circumferentially adjacent cutting tips. When the circular saw blade is rotated, chips collide against the joints of the cutting tips that protrude in the thickness direction. The cutting tips may be chipped starting from the point where chips collide. The cutting tips are particularly susceptible to chipping in the area close to the joint. Therefore, there is a need for cutting tips that are prevented from chipping at the joints.

In conventional circular saw blades for metal cutting, for example, a chip breaker may be formed on a rake face of the cutting tip. The chip breaker is arc-shaped viewing from the thickness direction of the cutting tip. Chips produced by the cutting edges are fed along the arc-shaped surface of the chip breaker and curled into a spring-like shape. An elastic force of the spring-formed chips may be used to discharge the chips from the gullet of the circular saw blade.

Circular saw blades for metal cutting may be used, for example, for cutting pipes, tubes, or solid materials. When cutting tips cut solid material, a volume of chips produced during one rotation of a single cutting tip is greater than when cutting pipe or tube. A volume of the circular saw blade's gullet may be insufficient for the size of the workpiece. Or the generated chips may be excessively compressed in the chip breaker. In such cases, chips may not be discharged from the gullet properly, resulting in chip clogging. Therefore, the applicable range of the circular saw blade is limited by the size of the workpiece and other cutting conditions. Therefore, there is a need for a circular saw blade for metal processing that can be applied to a wide range of workpieces.

### SUMMARY

### Technical Problem

As described above, cutting tips may become chipped due to chip's collision or chips may be clogged in circular saw blades for metal cutting. As a result, the cutting performance of the circular saw blade may deteriorate. Therefore, there is a need for a circular saw blade for metal cutting that can suppress the reduction in cutting performance due to the influence of chips.

### Solution to Problem

According to one feature of the present disclosure, a circular saw blade for metal cutting has a disk-shaped base metal, gullets opening radially outward at an outer periphery of the base metal, and tip-receiving seats recessed at rear ends of the gullets in a rotational direction. The circular saw blade has cutting tips mounted on the tip-receiving seats and protruding radially outward from the base metal. Each of the cutting tips has a cutting edge where a rake face and a flank intersect. Each of the cutting tips has a thickness that is thicker than that of the base metal. Each of the cutting tips has a thin portion on a radially inner side that has a thickness of less than or equal to that of the base metal. The thin portion is located within a thickness of the tip-receiving seat in a thickness direction.

Therefore, side faces of the thin portion on the radially inner side of the cutting tip do not protrude more in the thickness direction than the base metal. Therefore, chips are prevented from colliding a joint on the radially inner side of the cutting tip, and chipping of the cutting tip can be prevented. Further, clogging caused by chips may be prevented at the joins on the radially inner side of the cutting tip. Thus, it is possible to prevent the cutting tip from chipping due to the influence of the chips and to suppress cutting performance deterioration due to the clogging caused by chips.

In the cutting edge according to another feature of the present disclosure, a rake angle defined by the rake face and a radial line of the base metal is negative. Therefore, a length in the rotational direction of the thin portion provided on the radially inner side of the cutting tip may be secured long with respect to a length in the rotational direction of a radially outer area of the cutting tip. Therefore, an area of the joint at the radially inner side of the cutting tip to the tip-receiving seat can be secured widely. This prevents the cutting tip from being removed from the tip-receiving seat, thereby preventing a deterioration in cutting performance.

According to another feature of the present disclosure, the cutting tip has an inner area that is radially inward from a front end of the tip-receiving seat in the rotational direction. The thin portion occupies the entire area of the inner area. Therefore, the protrusion in the thickness direction can be suppressed in the entire area of the joint of the thin portion of the cutting tip, to which chips easily contact. As a result, chipping of the cutting tip and clogging near the front end of the joint of the cutting tip can be more reliably suppressed.

According to another feature of the present disclosure, the thin portion has a first face extending radially inward from a front face of the cutting tip and rearward in the rotational direction. The thin portion has a second face extending rearward in the rotational direction from the first face. The thin portion has a third face extending radially outward from a rear end of the second face in the rotational direction. The cutting tip has a rake face on the front side in the rotational direction. An arc-shaped chip breaker is recessed into the radially inner side of the rake face rearwardly in the rotational direction.

Therefore, the thin portion may be formed into a convex shape radially inward by the first to third faces. This formation allows the cutting tip to be firmly attached to the tip-receiving seat. Further, the displacement of the cutting tip relative to the tip-receiving seat in the rotational direction may be prevented. A radial length of the radially outer area is ensured to be longer than the thin portion to increase a radius of curvature of the chip breaker. This prevents chips from clogging in the chip breaker. Thus, for example, it is possible to cut solid material with a larger diameter than that of solid material, which falls within the applicable range of conventional circular saw blades.

### BRIEF DESCRIPTION OF THE DRAWINGS

FIG. 1 is a side view of a circular saw blade.
FIG. 2 is an enlarged side view of a section II in FIG. 1.
FIG. 3 is a front view of a cutting tip as viewed from a rake face side.
FIG. 4 is a top view of the cutting tip as viewed from the flank side.

### DETAILED DESCRIPTION

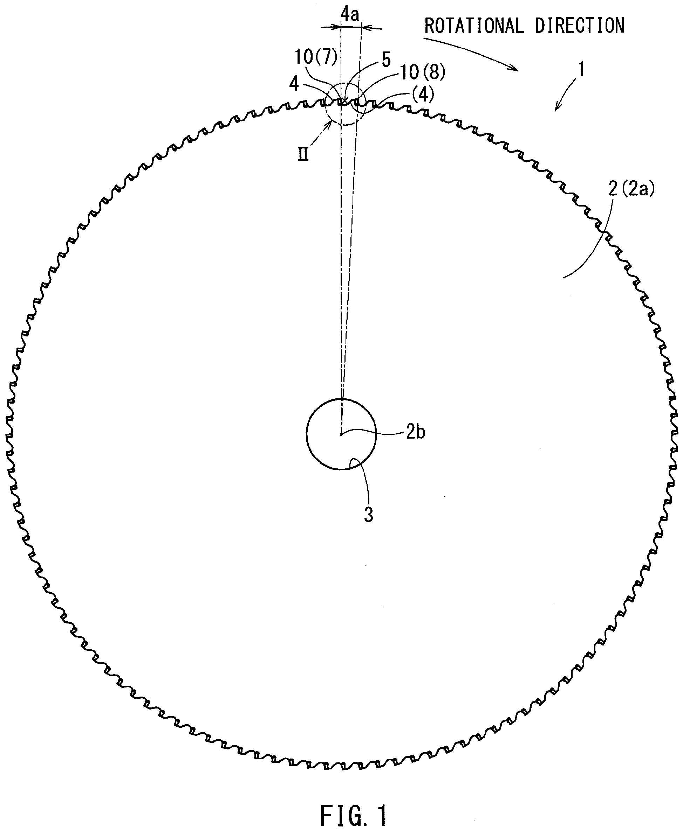

Preferred embodiments of the present disclosure will be described with reference to FIG. 1 to FIG. 4. The same reference numerals in the description refer to the same elements having the same function and will not be repeatedly described. In this embodiment, a circular saw blade 1 for metal processing will be exemplary described. As shown in FIG. 1, the circular saw blade 1 has a disk-shaped base metal 2 and a plurality of cutting tips 10 mounted on an outer periphery of the base metal 2. By rotating the base metal 2, each tip 10 forms a groove in the workpiece and ultimately cuts the workpiece. The workpiece may be, for example, steel materials such as carbon steel, general structural rolled steel, chrome molybdenum steel, stainless steel, cast iron, or nonferrous metals such as aluminum and aluminum alloys, copper and copper alloys. The workpiece may be, for example, tubular tube or pipe material, solid bar material, etc. The workpiece is cut to a predetermined length by the circular saw blade 1. The workpiece may be cut, for example, at room temperature.

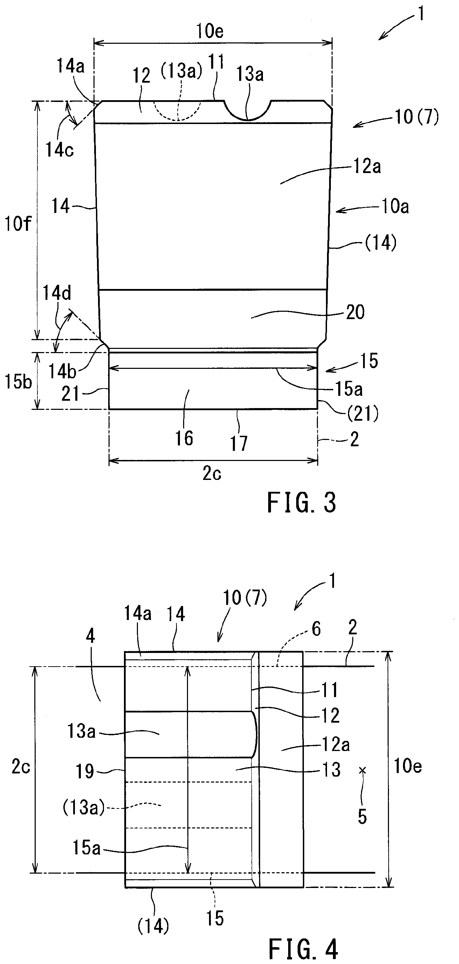

As shown in FIG. 1, the base metal 2 has a disk-shaped body 2a and a substantially circular mounting hole 3 that passes through a center of the body 2a in a thickness direction of the base metal 2. A rotation shaft of a circular sawing machine is inserted into the mounting hole 3. The circular saw blade 1 rotates around an axis of a base metal 2b in a circumferential direction of the body 2a. A plurality of cutting tips 10 lined up around the outer periphery of the base metal 2 reaches a workpiece in order from a front in a rotational direction and cuts the workpiece. An outer diameter of the circular saw blade 1 may be preferably 200 mm to 500 mm, for example 285 mm. The base metal 2 may be made of steel, for example. A thickness 2c of the base metal 2 (see FIG. 3) may be preferably 0.6 mm to 1.8 mm, for example 1.7 mm.

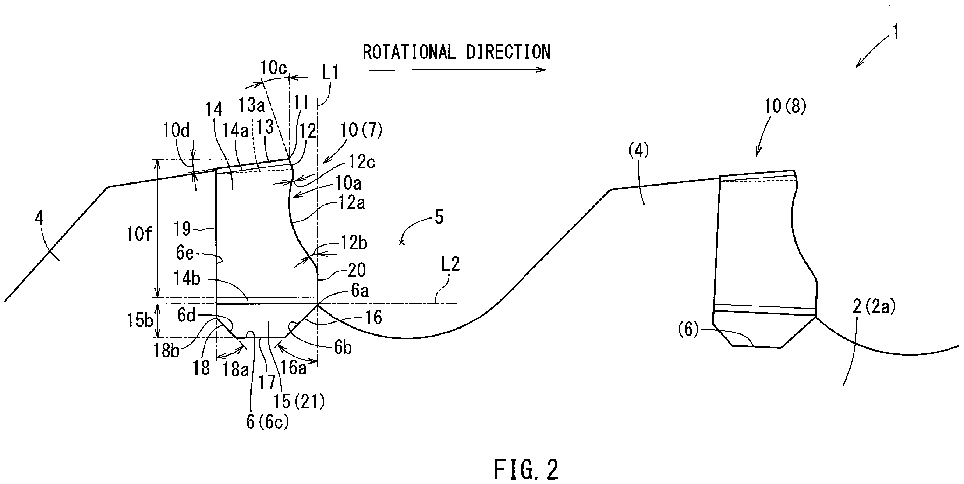

As shown in FIGS. 1 and 2, the base metal 2 has projections 4 protruding radially outward from the outer circumference of the body 2a. The protrusions 4 may be formed with an equally spaced pitch 4a in the circumferential direction of the outer circumference of the body 2a. A gullet 5 is formed between adjacent protrusions 4. An tip-receiving seat 6 is formed in each of the protrusion 4, which open radially outward on the front side in the rotational direction. A cutting tip 10 is attached to each tip-receiving seat 6. The circular saw blade 1 may preferably have from 40 to 200, for example, 120, of cutting tips 10.

As shown in FIGS. 2- 4, the cutting tip 10 has a rectangular box-shaped tip body 10a and a rectangular box-shaped thin portion 15 provided radially inside the tip body 10a. The tip body 10a may have a height 10f of, for example, 2.0 mm in the radial direction. The tip body 10a has a rake face 12 on a front side in the rotational direction and a flank 13 on a radially outer side. A cutting edge 11 is formed at an intersection of the rake face 12 and the flank 13. The cutting edge 11 extends in the thickness direction with a blade thickness 10e slightly greater than the thickness 2c of the base metal 2. The blade thickness 10e may be preferably 0.8 mm to 2.0 mm, for example 2.0 mm.

The cutting tip 10 shown in FIG. 2 is a hard cutting tip made of, for example, cemented carbide or cermet. Cemented carbide may be obtained, for example, by mixing tungsten carbide with cobalt as a binder and sintering the mixture. Cermet may be obtained by mixing TiN, TiC, TiCN, etc. with cobalt as a binder and sintering the mixture. A surface of the cutting tip 10 may be coated to improve wear resistance.

As shown in FIGS. 2-4, a groove 13a extending in the circumferential direction is formed in the flank 13. The groove 13a extends from the cutting edge 11 at a front end in the rotational direction of the flank 13 to a rear end in the rotational direction of the flank 13. The groove 13a has a substantially U-shape as viewing from the front in the rotational direction of the circular saw blade 1. By providing the groove 13a, the cutting edge 11 is divided into left and right sides of the groove 13a. Therefore, chips cut from the workpiece are divided into left and right sides by the cutting edges 11 divided by the groove 13a. The groove 13a is provided at a location off-centered either to the left or to the right from the center of the cutting tip 10 in the thickness direction by a predetermined distance. The cutting tip 10 includes firstcutting tips 7 with the groove 13a off-centered to the left from the center in the thickness direction and second cutting tips 8 with the groove 13a off-centered to the right from the center in the thickness direction. The first cutting tips 7 and the second cutting tips 8 are attached alternately in the circumferential direction of the base metal 2.

As shown in FIG. 2, a clearance angle 10d between a circumferential tangent of the base metal 2 and the flank 13 may be preferably 5° to 15°, for example 10°. The rake angle 10c of the rake face 12 inclined to the radial direction of the base metal 2 may be preferably -30° to -5°, for example -20°.

As shown in FIGS. 2 and 3, a chip breaker 12a is formed on a radially inner area of the rake face 12, which is recessed rearward in the rotational direction. The chip breaker 12a is formed over the entire thickness direction of the tip body 10a. The chip breaker 12a is arc-shaped as being viewed from the thickness direction. The chips cut by the cutting edge 11 are fed to the side of the rake face 12 and curled in a spring-like shape by the chip breaker 12a. The chips curled by the chip breaker 12a are discharged from the gullets 5 or grooves formed in the workpiece utilizing elastic force.

As shown in FIG. 2, a radius of curvature of the chip breaker 12a is greater than or equal to 50% of the height 10f of the tip body 10a, for example, 1.2 mm. The tip body 10a has a front face 20 extending from a radially inner side of the chip breaker 12a to the radially inward of the base metal 2. An angle 12b at which the front face 20 intersects the radial inner side of the chip breaker 12a may be, for example, 35°. An angle 12c between a radially outer side of the chip breaker 12a and an extended surface of the rake face 12 may be, for example, 30°.

As shown in FIG. 3, the tip body 10a has a side face 14 at each end of the flank 13 in the thickness direction. The side face 14 has an inclination angle of 0° to 2° with respect to the radial direction of the base metal 2, for example, 30' inward inclination angle (radial clearance angle). This slight inclination reduces a contact area between the side face 14 and the workpiece. Therefore, a cutting resistance of the side face 14 is reduced. Furthermore, since the side face 14 is inclined such that it does not excessively protrude beyond a cut surface of the workpiece, a smooth finish of the cut surface can be ensured.

As shown in FIG. 2 to FIG. 4, an upper chamfer 14a is formed between the flank 13 and the side face 14. The upper chamfer 14a is inclined with respect to the flank 13 as viewing from the front in the rotational direction, and may have a chamfer angle 14c of, for example, 45°. The upper chamfer 14a is formed in a planar shape with substantially the same width in the thickness direction from a front of the flank 13 in the rotational direction to a rear of the flank 13 in the rotational direction. A width of the upper chamfer 14a in the thickness direction may be, for example, 0.05 mm to 0.1 mm.

As shown in FIG. 2, the thin portion 15 is provided at least radially inward of a radially inner area of the front face 20 of the cutting tip 10. More specifically, the cutting tip 10 has an inner area that is inside an arc passing through the radially inner edge of the front face 20 with the center of the base metal 2. The inner area of the cutting tip 10 is occupied by the thin portion 15. The thin portion 15 is also located radially outward from the inner area. For example, the thin portion 15 may be located up to a tangent line L2 passing through the radially inner edge of the front face 20 and tangent to the arc passing with the center of the base metal 2.

As shown in FIGS. 2- 3, the thin portion 15 has a thickness 15a less than or equal to the blade thickness 10e. The thickness 15a is less than or equal to the thickness 2c of the base metal 2, and may be, for example, 1.7 mm, which is the same as the thickness 2c. A side face 21 of the thin portion 15 attached to the tip-receiving seat 6 is flush with the side face of the base metal 2 and do not extend outward at least to the left and right of the side face of the base metal 2. Therefore, the thin portion 15 is attached to the tip-receiving seat 6 within a thickness of the tip-receiving seat 6 in the thickness direction.

As shown in FIG. 2, the thin portion 15 is substantially trapezoidal in shape as viewing from the thickness direction. The thin portion 15 has a first face 16, a second face 17, and a third face 18 that are oriented radially inward and are planar, respectively. The first face 16 extends radially inward from the radially inner area of the front face 20 rearwardly in the rotational direction. The first face 16 has an inclination angle 16a with respect to a radial line L1 extending in the radial direction of the base metal 2. The inclination angle 16a may be preferably between 30° and 60°, for example 45°. A length of the first face 16 in the rotational direction may be, for example, 20 to 40% of the rotational length of the cutting tip 10, for example 0.5 mm.

As shown in FIG. 2, the second face 17 originates from the rear end of the first face 16 in the rotational direction and extends rearwardly in the rotational direction substantially orthogonally to the radial line L1 and substantially parallel to the circumferential line L2. The second face 17 is located at the radially innermost position of the thin portion 15. The thin portion 15 has a radial height 15b of, for example, 10 to 30% of the height 10f of the tip body 10a. The height 15b may be, for example, 0.5 mm and corresponds to a radial distance from the radially inner area of the front face 20 to the second face 17.

Still shown in FIG. 2, the third face 18 extends radially outward from a rear end of the second face 17 in the rotational direction. The third face 18 has an inclination angle 18a with respect to the radial line L1. The inclination angle 18a may be preferably between 30° and 60°, for example 45°. A length in the rotational direction of the third face 18 may be, for example, 10 to 30% of the length in the rotational direction of the cutting tip 10, for example 0.3 mm. A rear end 18b of the third face 18 in the rotational direction is located radially inward from the radially inner area of the front face 20. The cutting tip 10 has a planar rear end face 19 extending radially outward from the radially outer side of the third face 18 to the flank 13. The rear end face 19 extends substantially parallel to the radial line L1.

Still shown in FIG. 2, the tip-receiving seat 6 has a planar first face 6b, second face 6c, third face 6d, and rear end 6e, which are formed in accordance with an external contour of the cutting tip 10. The cutting tip 10 is brazed, e.g. silver brazed to the first face 6b, the second face 6c, the third face 6d, and the rear end face 6e. The radially inner area of the front face 20 of the cutting tip 10 is located at substantially the same position as a front end 6a of the tip-receiving seat 6 in the rotational direction.

As shown in FIG. 3, the thin portion 15 has a radially extending side face 21 on each side in the thickness direction. A lower chamfer 14b is formed between a radially outer area of the side face 21 of the thin portion 15 and a radially inner area of the side face 14 of the tip body 10a. The lower chamfer 14b is inclined with respect to a rotational axis direction of the circular saw blade 1 and may have a chamfer angle 14d of, for example, 45°. The lower chamfer 14b is formed planar having substantially the same width in the rotational direction. The width of the lower chamfer 14b in the thickness direction may be, for example, 0.10 to 0.15 mm.

As described above, the circular saw blade 1 for metal cutting has a disk-shaped base metal 2, gullets 5 opening radially outward at an outer periphery of the base metal 2, and tip-receiving seats 6 recessed at rear ends of the gullets 5 in the rotational direction, as shown in FIGS. 2 and 3. The circular saw blade 1 has cutting tips 10 that are mounted on the tip-receiving seats 6 and project radially outward from the base metal 2. The cutting tip 10 has a cutting edge 11 where a rake face 12 and a flank 13 intersect. A blade thickness 10e of the cutting tip 10 is thicker than a thickness 2c of the base metal 2. The cutting tip 10 has a thin portion 15 on a radially inner side that is less than or equal to the thickness 2c of the base metal 2. The thin portion 15 is located within a thickness of the tip-receiving seat 6 in the thickness direction.

Therefore, side faces 14 of the thin portion 15 on a radially inner side of the cutting tip 10 are formed so that side faces 14 do not protrude more in the thickness direction than the base metal 2. Therefore, the chips are prevented from colliding a joint on a radially inner side of the cutting tip 10, and chipping of the cutting tip 10 can be prevented. Further, clogging caused by chips may be prevented at the joint on the radially inner side of the cutting tip 10. Thus, it is possible to prevent the cutting tip 10 from chipping due to the influence of the chips and to suppress cutting performance deterioration due to the clogging caused by the chips.

Still shown in FIG. 2, at the cutting edge 11, the rake angle 10c defined by the rake face 12 and the radial line L1 of the base metal 2 is negative. For example, the rake face 12 extends radially inward from the cutting edge 11 and in the rotational direction. Therefore, the length in the rotational direction of the thin portion 15 provided on the radially inner side of the cutting tip 10 may be secured long with respect to the length in the rotational direction of the radially outer area of the cutting tip 10. Therefore, an area of the joint at the radially inner side of the cutting tip 10 to the tip-receiving seat 6 can be secured widely. This prevents the cutting tip 10 from being removed from the tip-receiving seat 6, thereby preventing a deterioration of the cutting performance.

As shown in FIGS. 2-3, the cutting tip 10 has an inner area that is radially inward from the front end 6a of the tip-receiving seat 6 in the rotational direction. The thin portion 15 occupies the entire area of the inner area. Therefore, the protrusion in the thickness direction can be suppressed in the entire area of the joint of the thin portion 15 of the cutting tip 10, to which chips easily contact. As a result, chipping of the cutting tip 10 and clogging near the front end of the joint of the cutting tip 10 can be more reliably suppressed.

As shown in FIG. 2, the thin portion 15 has a first face 16 extending radially inward from the radially inner side of front face 20 rearwardly in the rotational direction. The thin portion 15 has a second face 17 extending rearward from the first face 16 in the rotational direction. The thin portion 15 has a third face 18 extending radially outward from the rear end of the second face 17 in the rotational direction. The cutting tip 10 has a rake face 12 on the front side in the rotational direction. An arc-shaped chip breaker 12a is recessed into the radially inner side of the rake face 12 rearward in the rotational direction.

Therefore, as shown in FIG. 2, the thin portion 15 may be formed into a convex shape radially inward by the first face 16, the second face 17, and the third face 18. This formation allows the cutting tip 10 to be firmly attached to the tip-receiving seat 6. Further, the displacement of the cutting tip 10 relative to the tip-receiving seat 6 in the rotational direction may be prevented. The radial length (height 10f) of the radially outer area of the thin portion 15 is secured to be long to increase the radius of curvature of the chip breaker 12a. This prevents chips from forming distorted shapes in the chip breaker 12a and prevents chips from clogging in the chip breaker 12a. Therefore, a number of teeth of the circular saw blade 1 can be increased, and the maximum number of working teeth (the maximum number of teeth entering a groove formed in the workpiece at the time of cutting) can be increased more than those of conventional saw blade. Although the maximum number of working teeth has typically been 3.5 teeth in conventional circular saw blades, in the circular saw blade 1 of the present disclosure, the maximum number of working teeth could be increased to 5 teeth. Thus, for example, it is possible to cut solid material with a diameter larger than that of solid material, which is the application range of the conventional circular saw blade 1.

Various modifications may be made to the circular saw blade 1 of the present embodiment described above. The circular saw blade 1 has been illustrated in which the protrusions 4 are arranged at equally spaced pitches 4a in the circumferential direction of the base metal 2. Instead of this, the pitch 4a may be modified to unequal intervals. A configuration has been illustrated, in which two types of the cutting tips 10 (first tip 7 and second tip 8) with the groove 13a located at different left-right positions are used to cut grooves divided in the workpiece in the left-right directions. Alternatively, the circular saw blade 1 may have three or more types of the cutting tips 10 with the groove 13a located at different left-right positions. Instead of the U-shaped groove 13a, a V-shaped groove may be formed on the flank 13, for example.

The examples illustrated a configuration in which the thickness 2c of the base metal 2 and the thickness 15a of the thin portion 15 are the same, and the cutting tip 10 is mounted on the tip-receiving seat 6 such that the side face of the base metal 2 is flush with the side face 21 of the thin portion 15. Alternatively, the thickness 15a of the thin portion 15 may be thinner than the thickness 2c of the base metal 2. The center of the cutting tip 10 may be displaced to the left or to the right relative to the center of the thickness direction of the base metal 2, as long as the side face 21 of the thin portion 15 does not exceed the side face of the base metal 2 outwardly in the thickness direction. The ridge line where the front face 20 and the first face 16 of the cutting tip 10 intersect may be located radially outward from the front end 6a of the tip-receiving seat 6 in the rotational direction.

## Claims

1. A circular saw blade for metal cutting comprising:
a disk-shaped base metal;
a plurality of gullets opening radially outward at an outer periphery of the base metal;
a plurality of tip-receiving seats configured to recess at rear ends of the plurality of gullets in a rotational direction; and
a plurality of cutting tips mounted on the plurality of tip-receiving seats and protruding radially outward from the base metal,
wherein each of the plurality of cutting tips has a cutting edge where a rake face and a flank intersect, and a thickness that is thicker than a thickness of the base metal,
wherein the each of the plurality of cutting tips has a thin portion on a radially inner side that is thinner than or equal to the base metal, and
wherein the thin portion is located within a thickness of each of the plurality of tip-receiving seats in a thickness direction.

2. The circular saw blade according to claim 1, wherein a rake angle defined by the rake face and a radial line of the base metal is negative.

3. The circular saw blade according to claim 1 or 2, wherein the each of the plurality of cutting tips has an inner area that is radially inward from a front end of the each of the plurality of tip-receiving seats in the rotational direction, and wherein the thin portion occupies an entire area of the inner area.

4. The circular saw blade according to any one of claims 1 to 3, wherein the thin portion includes
a first face extending radially inward from a front face of the each of the plurality of cutting tips rearwardly in the rotational direction,
a second face extending rearward in the rotational direction from the first face, and
a third face extending radially outward from a rear end of the second face in the rotational direction.

5. The circular saw blade according to any one of claims 1 to 4, wherein the each of the plurality of cutting tips has a rake face on a front side in the rotational direction, and wherein an arc-shaped chip breaker is recessed into a radially inner side of the rake face rearwardly in the rotational direction.
